# EUROPÄISCHE PATENTSCHRIFT

(11) **EP 0 664 254 B1**
(45) Veröffentlichungstag und Bekanntmachung des Hinweises auf die Patenterteilung: **21.05.1997**
(21) Anmeldenummer: 95100908.3
(22) Anmeldetag: 24.01.1995
(51) Int. Cl.: B64F 1/00, B64F 1/36, B64F 1/28, E02D 29/14

(54) **Versorgungsanordnung**
Supply device
Dispositif d'alimentation

(30) Priorität: 24.01.1994 DE 9401022 U
(43) Veröffentlichungstag der Anmeldung: 26.07.1995
(73) Patentinhaber: Manfred Fladung GmbH, 63776 Mömbris (DE)
(72) Erfinder: Fladung, Manfred, D-63776 Mömbris (DE)
(74) Vertreter: Stoffregen, Hans-Herbert, Dr. Dipl.-Phys.

(56) Entgegenhaltungen:
- DE-A- 2 906 342
- DE-A- 3 743 393
- FR-A- 1 524 844
- GB-A- 674 118

## Beschreibung

Die Erfindung bezieht sich auf eine Versorgungsanordnung umfassend in einer Bodenfläche wie z. B. auf einem Rollfeld eingelassenen, eine von einer deckelförmigen Abdeckung verschließbare Öffnung aufweisenden Schacht, in dem eine Versorgungsleitung für insbesondere elektrische Energie lagerbar und über die Öffnung zumindest teilweise herausnehmbar angeordnet ist, wobei die mit einer innerhalb des Schachtes geführt aufgenommenen Anhebe- bzw. Absenkeinrichtung verbundene Abdeckung zum Anheben von der bzw. Absenken auf die Öffnung entlang einer Geraden verschiebbar ist.

Eine entsprechende Versorgungsanordnung ist z. B. der DE 29 06 342 A1 zu entnehmen. Die bekannte Anordnung ist zum Auftanken von Flugzeugen bestimmt und weist eine innerhalb der Schachtgrube vertikal verschiebbare Plattform auf, die ihrerseits eine Trommel für einen Schlauch trägt.

Oberhalb der Plattform ist eine den Schacht abdeckbare Abdeckplatte vorhanden, die bei angehobener Plattform um eine vertikal verlaufende Achse verschwenkbar ist. Dies ist erforderlich, um die auf der Plattform vorhandene Kabeltrommel zugänglich zu machen.

Die Plattform und die Abdeckplatte werden über eine Kolben-Zylinder-Anordnung hydraulisch angehoben bzw. abgesenkt.

Dadurch, daß die Abdeckplatte zwei Bewegungen einer vertikalen und einer Schwenkbewegung- unterzogen werden muß, ist die Anordnung konstruktiv aufwendig, wobei sichergestellt sein muß, daß die Abdeckplatte bei einem Zurückfahren der Kolben-Zylinder-Anordnung fluchtend zur Öffnung der Schachtgrube ausgerichtet ist, da andernfalls ein Schließen dieser nicht möglich ist.

Bei anderen bekannten Anordnungen werden in einen von einem Deckel verschließbaren Schacht Versorgungskabel eingebracht. Um dieses zugänglich zu machen, also um den Schacht zu öffnen, ist der Deckel um eine horizontale Achse verschwenkbar ausgebildet. Um die im Schacht abgelegte Versorgungsleitung zu erfassen, muß der Schacht vollständig geöffnet werden, d. h., der Deckel um seine horizontale Achse um mehr als 90° verschwenkt werden.

Der vorliegenden Erfindung liegt die Aufgabe zugrunde, eine Versorgungsanordnung der zuvor genannten Art so weiterzubilden, daß mit konstruktiv einfachen Maßnahmen die Versorgungsleitung zugänglich ist, ohne daß es eines Verschwenkens des Deckels bedarf. Auch soll sichergestellt sein, daß beim Herausziehen der Versorgungsleitung diese am Rand der Öffnung nicht beschädigt werden kann.

Erfindungsgemäß wird die Aufgabe im wesentlichen dadurch gelöst, daß die Gerade, entlang der die Abdeckung verschiebbar ist, zur von der Öffnung aufgespannten Ebene geneigt verläuft. Dabei beschreibt die Gerade zu der Ebene einen Winkel α mit vorzugsweise 30° ≤ α ≤ 60°, insbesonder α = 45°.

Durch die erfindungsgemäße Lehre bedarf es allein einer Linearbewegung des Deckels, um die Versorgungsleitung bzw. einen von diesem ausgehenden Stecker zu erfassen, um diesen an ein Flugzeug anzuschließen und somit z. B. mit Strom zu versorgen. Dadurch, daß der Deckel beim Anheben gleichzeitig parallel zur Ebene der Öffnung bewegt wird, wird die Öffnung des Schachtes sehr schnell zugänglich so daß es konstruktiv aufwendiger Maßnahmen zum Führen der Abdeckung bei deren Anheben bzw. Absenken nicht bedarf.

Insbesondere ist vorgesehen, daß, die Abdeckung mit einem Linearset verbunden ist, das von einer Führung aufgenommen ist, die von einer Schachtwand oder von einem die Abdeckung aufnehmenden und die Öffnung begrenzenden Einsatz des Schachtes ausgeht.

Vorzugsweise umfasst das Linearset zwei kugelgelagerte verchromte Wellen.

Entlang des Verschiebeweges der Abdeckung erstreckt sich des weiteren eine Dämpfungseinrichtung wie Druckdämpfer, die mittelbar oder unmittelbar von dem Schacht ausgeht und mit der Abdeckung verbunden ist. Hierdurch ist sichergestellt, daß die Abdeckung in jeder gewünschten Position verbleibt, also insbesondere ein unkontrolliertes Absenken nicht erfolgen kann, wodurch andernfalls die Gefahr bestünde, daß im Öffnungsrand befindliche Gegenstände abgeschert werden. Dies ist dagegen bei um eine horizontale Achse verschwenkbaren Deckel nur schwerlich auszuschließen.

Um die Versorgungsleitung bzw. den von dieser ausgehenden Stecker einfach zu erfassen, ist vorgesehen, daß entlang der zur Öffnung schräg verlaufenden Geraden im festen Abstand zur Unterseite der Abdeckung zumindest eine Halterung für die Versorgungsleitung angeordnet ist. Diese selbst ist vorzugsweise am Boden des Schachtes ablegbar, ohne daß es zusätzlicher Aufwickelmechanismen bedarf.

Der Boden selbst kann eine Senke aufweisen, von der ein Entwässerungsrohr ausgeht, um in dem Schacht sich ansammelndes Wasser abfließen zu lassen. Auch kann der Schacht mit einer Heizung versehen sein, um einen ungestörten Betrieb auch bei tiefen Temperaturen zu gewährleisten.

Damit die Anordnung unabhängig von den natürlichen Lichtverhältnissen benutzt werden kann, sieht eine Weiterbildung der Erfindung vor, daß die Abdeckung unterseitig eine Beleuchtung aufweist. Auch oder alternativ kann eine Warnlampe vorhanden sein.

In der Deckeloberseite selbst ist eine versenkbare Handhabe wie Griff vorhanden, uni die Abdeckung erfassen zu können.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:

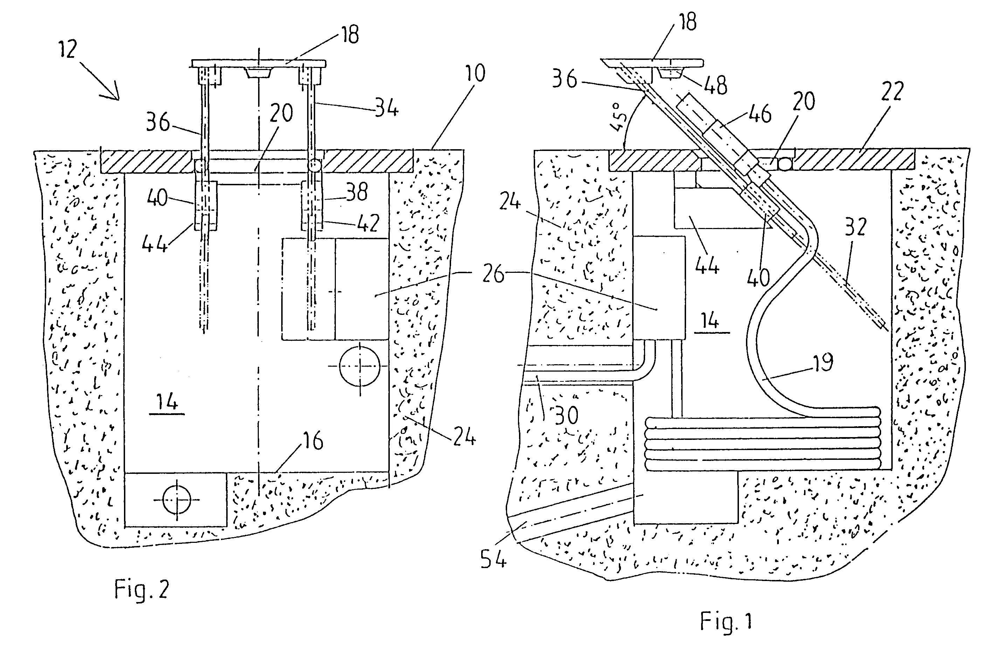

- Fig. 1: eine Versorgungsanordnung mit angehobener Abdeckung im Schnitt,
- Fig. 2: die Versorgungsanordnung nach Fig. 1, ebenfalls im Schnitt, jedoch um 90° gedreht, und

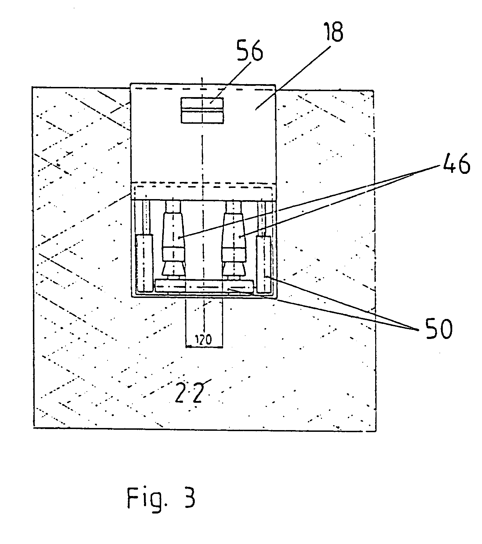

- Fig. 3: die Versorgungsanordnung nach Fig. 1 bzw. Fig. 2 in Draufsicht.

Um z. B. ein nicht dargestelltes Flugzeug, das sich auf einer Fläche (10) wie Rollfeld in Parkposition befindet, mit 200V/400Hz und/oder 250V/50Hz Spannung und/oder Druckluft und/oder Wasser zu versorgen, ist eine Versorgungsanordnung (12) vorgesehen, die einen Schacht (14) umfaßt, auf dessen Boden (16) eine Versorgungsleitung (19) wie Versorgungskabel ablegbar ist. Das Versorgungskabel (19) ist über eine Öffnung (20) zugänglich, die von einer Abdeckung wie Deckel (18) in nachstehender Art verschließbar ist. Die Öffnung (20) selbst ist im Ausführungsbeispiel in einer den gesamten Schachtquerschnitt (14) verschließenden Platte (22) eingelassen.

An einer Innenwandung (24) ist ein Klemmkasten (26) befestigt, in dem die Adern eines von außen in den Schacht (14) über ein Rohr eingeführtes Versorgungskabel (30) mit dem Kabel (18) verbunden wird.

Erfindungsgemäß ist die Abdeckung bzw. der Deckel (18) entlang einer Geraden (32) verschiebbar, die zur Horizontalen, also zur Oberfläche der Platte (22) bzw. der von der Öffnung (20) aufgespannten Ebene einen Winkel α mit α vorzugsweise 45° beschreibt. Hierzu gehen im Ausführungsbeispiel von der Unterseite des Deckels (18) hartverchromte Wellen (34) und (36) aus, die über Kugellager abgestützt in hülsenartigen Führungen (38) und (40) verschiebbar sind, die ihrerseits von Aufnahmen (42) und (44) ausgehen, die mit der Unterseite der Platte (22) verbunden sind.

Wirkt nun auf den Deckel (18) eine Zugkraft, so wird der Deckel (18) entlang der Geraden (32) verschoben. Hierdurch bedingt wird bereits nach einer kurzen Hubstrecke die Öffnung (22) freigegeben, so daß das Versorgungskabel (19) bzw. ein von dessen Ende ausgehender Stecker (46) schon beim geringen Abstand zwischen dem Deckel (18) und der Oberseite der Platte (22) zugänglich ist. Hierzu geht der Stecker (46) von einer nicht näher bezeichneten Halterung aus, die mit dem Deckel (18) verbunden ist.

An der Unterseite des Deckels (18) ist des weiteren ein Beleuchtungskörper wie Lampe (48) vorhanden, um unabhängig von den natürlichen Lichtverhältnissen das Versorgungskabel (19) bzw. den Stecker (46) zu ergreifen.

Damit das Versorgungskabel (19) beim Herausziehen aus dem Schacht (14) bzw. beim Einbringen in diesen durch Entlangschleifen am Rand der Öffnung (20) nicht beschädigt werden kann, weist diese umfangsseitig Gleitelemente wie Rollen (50) auf.

Zu erwähnen ist noch, daß vom Boden (16) des Schachtes (14) eine Senke (52) ausgeht, um über diese bzw. ein in diese mündendes Rohr (54) in dem Schacht (14) angesammeltes Wasser ableiten zu können.

Ferner kann der Schacht (14) so ausgelegt sein, daß in diesem zwei Versorgungskabel eingebracht werden, wie das Ausführungsbeispiel verdeutlicht.

In der Oberseite des Deckels (18) ist eine Griffmulde (56) eingelassen, um den Deckel (18) auf einfache Weise erfassen zu können und somit anzuheben bzw. abzusenken.

Damit der Deckel (18) in jeder gewünschten Position verharrt und somit nicht unkontrolliert absinken kann, verläuft zwischen dem Deckel (18) und dem Schacht bzw. der Halterung (42) und (44) zumindest ein Dämpfungselement wie Gasdruckdämpfer, der jedoch in der Zeichnung nicht dargestellt ist.

## Patentansprüche

1. Versorgungsanordnung (12) umfassend in einer Bodenfläche (10) wie z. B. auf einem Rollfeld eingelassenen, eine von einer deckelförmigen Abdeckung (18) verschließbare Öffnung (20) aufweisenden Schacht (14), in dem zumindest eine Versorgungsleitung (19) für z.B. elektrische Energie lagerbar und über die Öffnung (20) zumindest teilweise herausnehmbar angeordnet ist, wobei die mit einer innerhalb des Schachtes geführt aufgenommenen Anhebe- bzw. Absenkeinrichtung (34, 36, 38, 40) verbundene Abdeckung zum Anheben von der bzw. Absenken auf die Öffnung entlang einer Geraden (32) verschiebbar ist,
**dadurch gekennzeichnet**,
daß die Gerade (32) zur von der Öffnung (20) des Schachtes (14) aufgespannter Ebene geneigt verläuft.

2. Versorgungsanordnung nach Anspruch 1,
**dadurch gekennzeichnet**,
daß die Gerade (32) zur Ebene unter einem Winkel α mit 30° ≤ α ≤ 60°, vorzugsweise α = 45° verläuft.

3. Versorgungsanordnung nach Anspruch 1 oder 2,
**dadurch gekennzeichnet**,
daß die Abdeckung (18) mit zumindest einem Linearset (34, 36, 38, 40) verbunden ist, das von einer Halterung (42, 44) aufgenommen ist, die von einer Schachtwandung oder einem die Abdeckung aufnehmenden und die Öffnung (20) begrenzenden Einsatz (22) wie Platte ausgeht.

4. Versorgungsanordnung nach zumindestens einem der vorhergehenden Ansprüche,
**dadurch gekennzeichnet**,
daß das Linearset eine kugelgelagerte und vorzugsweise hartverchromte Welle (34, 36) umfasst.

5. Versorgungsanordnung nach zumindestens einem der vorhergehenden Ansprüche,
**dadurch gekennzeichnet**,
daß die Abdeckung (18) über zumindest eine Dämpfungseinrichtung wie Gasdruckdämpfer mittelbar oder unmittelbar mit dem Schacht (14) verbunden ist.

6. Versorgungsanordnung nach zumindestens einem der vorhergehenden Ansprüche,
**dadurch gekennzeichnet**,
daß die Öffnung (20) des Schachtes (14) zumindest bereichsweise umfangsseitig die Versorgungsleitung (19) abstützende Gleitelemente wie Rollen (50) aufweist.

7. Versorgungsanordnung nach zumindestens einem der vorhergehenden Ansprüche,
**dadurch gekennzeichnet**,
daß entlang der zur Öffnung (20) schräg verlaufenden Geraden (32) im festen Abstand zur Unterseite der Abdeckung (18) zumindest eine Halterung für die Versorgungsleitung (19) angeordnet ist.

8. Versorgungsanordnung nach zumindestens einem der vorhergehenden Ansprüche,
**dadurch gekennzeichnet**,
daß die Versorgungsleitung (19) endseitig einen an der Halterung befestigbaren Stecker (46) aufweist.

9. Versorgungsanordnung nach zumindestens einem der vorhergehenden Ansprüche,
**dadurch gekennzeichnet**,
daß die Versorgungsleitung (19) am Boden (16) des Schachtes (14) vorzugsweise als Wickel ablegbar ist.

10. Versorgungsanordnung nach zumindestens einem der vorhergehenden Ansprüche,
**dadurch gekennzeichnet**,
daß innerhalb des Schachtes (14) zwei Versorgungsleitungen (19) ablegbar sind.

11. Versorgungsanordnung nach zumindestens einem der vorhergehenden Ansprüche,
**dadurch gekennzeichnet**,
daß die Abdeckung (18) unterseitig eine Beleuchtung (48) aufweist.

12. Versorgungsanordnung nach zumindestens einem der vorhergehenden Ansprüche,
**dadurch gekennzeichnet**,
daß die Abdeckung (18) außenseitig eine Griffmulde (56) aufweist.

13. Versorgungsanordnung (12) umfassend in einer Bodenfläche (10) wie z. B. auf einem Rollfeld eingelassenen, eine von einer deckelförmigen Abdeckung (18) verschließbare Öffnung (20) aufweisenden Schacht (14), in dem zumindest eine Versorgungsleitung (19) für z.B. elektrische Energie lagerbar und über die Öffnung (20) zumindest teilweise herausnehmbar angeordnet ist, wobei die mit einer innerhalb des Schachtes geführt aufgenommenen Anhebe- bzw. Absenkeinrichtung (34, 36, 38, 40) verbundene Abdeckung zum Anheben von der bzw. Absenken auf die Öffnung entlang einer Geraden (32) verschiebbar ist,
**dadurch gekennzeichnet**,
daß die Gerade (32) zur von der Öffnung (20) des Schachtes (14) aufgespannter Ebene geneigt verläuft, wobei entlang der zur Öffnung (20) schräg verlaufenden Geraden (32) im festen Abstand zur Unterseite der Abdeckung (18) zumindest eine Halterung für die Versorgungsleitung (19) angeordnet ist.

## Claims

1. Supply arrangement (12) comprising a well (14), which is let into a ground surface (10) such as, for example, a runway, has an opening (20) closable by means of a lid-like cover (18) and in which at least one supply line (19) for electrical energy, for example, is storable and arranged so as to be at least partially removable through the opening (20), the cover, which is connected to a lifting and lowering device (34, 36, 38, 40) accommodated in a guided manner inside the well, being displaceable along a straight line (32) for the purpose of lifting the cover off and lowering the cover onto the opening,
characterized in
that the straight line (32) extends in an inclined manner relative to the plane defined by the opening (20) of the well (14).

2. Supply arrangement according to claim 1,
characterized in
that the straight line (32) extends at an angle α, with 30° ≤ α ≤ 60°, preferably α = 45°, relative to the plane.

3. Supply arrangement according to claim 1 or 2,
characterized in
that the cover (18) is connected to at least one linear set (34, 36, 38, 40), which is accommodated by a holding device (42, 44), which emanates from a well wall or from an insert (22) such as a plate which receives the cover and delimits the opening (20).

4. Supply arrangement according to at least one of the preceding claims,
characterized in
that the linear set comprises a shaft (34, 36) which runs in ball bearings and is preferably hard-chrome plated.

5. Supply arrangement according to at least one of the preceding claims,
characterized in
that the cover (18) is connected by at least one damping device such as a gas pressure damper indirectly or directly to the well (14).

6. Supply arrangement according to at least one of the preceding claims,
characterized in
that the opening (20) of the well (14) at least in regions has sliding elements such as rollers (50) which peripherally support the supply line (19).

7. Supply arrangement according to at least one of the preceding claims,
characterized in
that at least one holding device for the supply line (19) is disposed along the straight line (32), which extends obliquely relative to the opening (20), at a fixed distance from the underside of the cover (18).

8. Supply arrangement according to at least one of the preceding claims,
characterized in
that the supply line (19) at its end has a connector (46) which is fastenable to the holding device.

9. Supply arrangement according to at least one of the preceding claims,
characterized in
that the supply line (19) may be deposited, preferably as a coil, on the base (16) of the well (14).

10. Supply arrangement according to at least one of the preceding claims,
characterized in
that two supply lines (19) may be deposited inside the well (14).

11. Supply arrangement according to at least one of the preceding claims,
characterized in
that the cover (18) at its underside has lighting (48).

12. Supply arrangement according to at least one of the preceding claims,
characterized in
that the cover (18) at its outside has a recessed grip (56).

13. Supply arrangement (12) comprising a well (14), which is let into a ground surface (10) such as, for example, a runway, has an opening (20) closable by means of a lid-like cover (18) and in which at least one supply line (19) for electrical energy, for example, is storable and arranged so as to be at least partially removable through the opening (20), the cover, which is connected to a lifting and lowering device (34, 36, 38, 40) accommodated in a guided manner inside the well, being displaceable along a straight line (32) for the purpose of lifting the cover off and lowering the cover onto the opening,
characterized in
that the straight line (32) extends obliquely relative to the plane defined by the opening (20) of the well (14), at least one holding device for the supply line (19) being disposed along the straight line (32), which extends obliquely relative to the opening (20), at a fixed distance from the underside of the cover (18).

## Revendications

1. Dispositif d'alimentation (12), comportant sous la surface du sol (10), comme par exemple sur un terrain d'aviation, un puits (14) présentant une ouverture (20) qui peut être fermée par un recouvrement (18) en forme de couvercle, et dans lequel au moins une conduite d'alimentation (19), par exemple en énergie électrique, est disposée de manière à pouvoir être rangée et extraite au moins partiellement par l'ouverture (20), lequel recouvrement, relié à un dispositif de relèvement et d'abaissement (34, 36, 38, 40) repris et guidé à l'intérieur du puits, peut être déplacé sur l'ouverture le long d'une ligne droite (32) en vue de son relèvement ou de son abaissement,
caractérisé en ce que
la ligne droite (32) s'étend obliquement par rapport au plan sous-tendu par l'ouverture (20) du puits (14).

2. Dispositif d'alimentation selon la revendication 1,
caractérisé en ce que
la ligne droite (32) forme avec le plan un angle a tel que 30° ≤ α ≤ 60°, et de préférence α = 45°.

3. Dispositif d'alimentation selon les revendications 1 ou 2,
caractérisé en ce que
le recouvrement (18) est relié à au moins un jeu de guides rectilignes (34, 36, 38, 40) logé dans un support (42, 44), lequel support déborde d'une paroi du puits ou d'une garniture (22), telle qu'une plaque, logeant le couvercle et délimitant l'ouverture (20).

4. Dispositif d'alimentation salon au moins l'une des revendications précédentes, caractérisé en ce que le jeu de guides rectilignes comporte un arbre monté sur palier à billes et de préférence durci au chrome (34, 36).

5. Dispositif d'alimentation selon au moins l'une des revendications précédentes,
caractérisé en ce que
le recouvrement (18) est relié directement ou indirectement au puits (14) par l'intermédiaire d'au moins un dispositif de vaporisation tel qu'un vaporisateur à pression de gaz.

6. Dispositif d'alimentation selon au moins l'une des revendications précédentes,
caractérisé en ce que
au moins dans certaines parties de sa périphérie, l'ouverture (20) du puits (14) présente des éléments coulissants tels que des galets (50), qui soutiennent la conduite d'alimentation (19).

7. Dispositif d'alimentation selon au moins l'une des revendications précédentes,
caractérisé en ce que
le long de la droite (32) qui s'étend obliquement par rapport à l'ouverture (20), au moins un support pour la conduite d'alimentation (19) est disposé à distance fixe de la face inférieure du recouvrement (18).

8. Dispositif d'alimentation selon au moins l'une des revendications précédentes,
caractérisé en ce que
à son extrémité, la conduite d'alimentation (19) présente une fiche (46) qui peut être fixée sur le support.

9. Dispositif d'alimentation selon au moins l'une des revendications précédentes,
caractérisé en ce que
la conduite d'alimentation (19) peut être rangée sur le fond (16) du puits (14), de préférence sous la forme d'un rouleau.

10. Dispositif d'alimentation selon au moins l'une des revendications précédentes,
caractérisé en ce que
deux conduites d'alimentation (19) peuvent être rangées à l'intérieur du puits (14).

11. Dispositif d'alimentation selon au moins l'une des revendications précédentes,
caractérisé en ce que
sur sa face inférieure, le recouvrement (18) présente un éclairage (48).

12. Dispositif d'alimentation selon au moins l'une des revendications précédentes,
caractérisé en ce que
sur sa face externe, le recouvrement (18) présente un creux à poignée (56).

13. Dispositif d'alimentation (12), comportant sous la surface du sol (10), comme par exemple sur un terrain d'aviation, un puits (14) présentant une ouverture (20) qui peut être fermée par un recouvrement (18) en forme de couvercle, et dans lequel au moins une conduite d'alimentation (19), par exemple on énergie électrique, est disposés de manière à pouvoir être rangée et extraite au moins partiellement par l'ouverture (20), lequel recouvrement, relié à un dispositif de relèvement et d'abaissement (34, 36, 38, 40) repris et guidé à l'intérieur du puits, peut être déplacé sous l'ouverture le long d'une ligne droite (32) en vue de son relèvement ou de son abaissement,
caractérisé en ce que
la droite (32) s'étend obliquement par rapport au plan sous-tendu par l'ouverture (20) du puits (14), et le long de la droite (32) s'étendant obliquement par rapport à l'ouverture (20), au moins un support pour la conduite d'alimentation (19) est disposé à distance fixe de la face inférieure du recouvrement (18).
